Europäisches Patentamt

European Patent Office

Office européen des brevets

(19)

(11) Veröffentlichungsnummer : **0 444 259 B1**

(12)

# EUROPÄISCHE PATENTSCHRIFT

(45) Veröffentlichungstag der Patentschrift :
**16.06.93 Patentblatt 93/24**

(51) Int. Cl.$^5$ : **C09J 175/04,** C09J 125/02,
B32B 7/12

(21) Anmeldenummer : **90123371.8**

(22) Anmeldetag : **06.12.90**

(54) Verwendungen von Mischungen aus wässrigen Polymerdispersionen.

(30) Priorität : **31.01.90 DE 4002727**

(43) Veröffentlichungstag der Anmeldung :
**04.09.91 Patentblatt 91/36**

(45) Bekanntmachung des Hinweises auf die
Patenterteilung :
**16.06.93 Patentblatt 93/24**

(84) Benannte Vertragsstaaten :
**DE FR GB IT SE**

(56) Entgegenhaltungen :
EP-A- 0 035 251
EP-A- 0 276 482
FR-A- 2 582 691
WPI, FILE SUPPLIER, AN=74-39349V, Derwent
Publications Ltd, Londen, GB; & JP-B-49 017
438

(73) Patentinhaber : **BAYER AG**
**W-5090 Leverkusen 1 Bayerwerk (DE)**

(72) Erfinder : **Witkowski, Reiner Dr.**
**Paulmühlenkamp 15**
**W-4300 Essen 11 (DE)**
Erfinder : **Ganster, Otto, Dr.**
**Droste-Hülshoff-Strasse 5**
**W-5068 Odenthal (DE)**
Erfinder : **Königshofen, Heinrich, Dr.**
**Am Mühlenberg 26**
**W-5060 Bergisch Gladbach 2 (DE)**
Erfinder : **Ostarek, Ralph, Dr.**
**Halskestrasse 13**
**W-4000 Düsseldorf 1 (DE)**

EP 0 444 259 B1

**Beschreibung**

Die vorliegende Erfindung betrifft Mischungen aus wäßrigen Polymerdispersionen sowie ein Verfahren zum Verkleben von Substraten mit diesen Mischungen.

In der Transportmittelindustrie, insbesondere im Automobilbau wird ein ständig wachsender Anteil der Fahrzeuginneneinrichtungen, wie Seitenteile, Armaturentafeln, Abdeckungen und Ablagen aus PVC-Folienkaschierten Holzfaserformstoffteilen und in neuerer Zeit aus thermoplastischen Kunststoffen gefertigt. Beim Kaschierprozeß (Vakuum-Tiefziehverfahren) treten aufgrund der stellenweise hohen Dehnung der Kaschierfolie z.T. extrem hohe Rückstellkräfte auf, die vom Klebstoff auf das Substrat übertragen werden müssen. Unter extremen klimatischen Bedingungen muß ein kaschiertes Innenteil hohen Temperaturen über einen langen Zeitraum ohne Delaminierung widerstehen können. Ein weiteres Problem bei der Herstellung kaschierter Innenteile ist die Weichmachermigration aus dem PVC-Folienmaterial, die die Festigkeit der Klebung mit der Zeit deutlich herabsetzen kann. Das hohe Eigenschaftsprofil für derartige Klebeverbindungen erreichten bisher nur lösungsmittelhaltige Zweikomponenten-PU-Systeme.

Hierfür werden aus Gründen des Umweltschutzes, der Arbeitshygiene und der Verarbeitungssicherheit zunehmend wäßrige Polymerdispersionen, insbesondere Polyurethandispersionen eingesetzt.

Klebstoffzusammensetzungen basierend auf wäßrigen Polymerdispersionen sind hinlänglich bekannt. Homo- und Copolymere von Acryl- und Vinylacetatmonomeren werden in breitem Umfang für Klebstoffzusammensetzungen verwendet. Diese Latices werden mit NCO-reaktiven Monomeren modifiziert, um hochwertige, vernetzbare Klebstoffe oder Überzüge zu erhalten.

In der DE-A-26 43 642 wird die Modifikation einer Acrylatdispersion mit 0,1 bis 100 Gew.-Teilen (bezogen auf Feststoff Dispersion) einer NCO-Verbindung beschrieben, welche als Haftklebstoffzusammensetzung dient. Ein weiteres Beispiel für eine NCO-modifizierte Polymerdispersion wird in der japanischen Kokai Nr. 75/69137 beschrieben. Diese beschreibt die Herstellung einer wasserfesten Klebstoffzusammensetzung aus einer wäßrigen Polymerdispersion (z.B. Butadien-MMA-Latex), einem Polyvinylalkohol und einer NCO-Komponente in einem unpolaren Lösungsmittel.

Die japanische Offenlegung Nr. 79/102334 beschreibt eine Klebstoffzusammensetzung die ein wasserlösliches Polymer oder wäßrige Polymerdispersion sowie eine hydrophile, mindestens zwei NCO-Gruppen je Molekül enthaltende Verbindung aufweist. Als wasserlösliche Polymere dienen beispielsweise Cellulosederivate oder Polyvinylpyrrolidon, als Polymerdispersionen werden EVAc, VAc-Acrylsäure-Copolymere eingesetzt. Die hydrophile Komponente besteht aus einem Umsetzungsprodukt zwischen einem Diisocyanat und einem NCO-reaktiven Polyether. Die Klebstoffzusammensetzung zeigt eine gute Wasserbeständigkeit.

In der japanischen Offenlegung 69/11279 wird eine Klebstoffzusammensetzung mit hoher Klebfestigkeit, Alterungsbeständigkeit und chemischer Beständigkeit beschrieben. Es handelt sich dabei um die Mischung einer carboxylatgruppenhaltigen Polymerdispersion mit einem NCO-reaktiven Copolymeren insbesondere für die Textilbeschichtung.

Die US-A-4 396 738 beschreibt eine wäßrige Klebstoff- und Überzugszusammensetzung aus einer wäßrigen Dispersion eines Polymeren oder Copolymeren und einer wäßrigen Dispersion eines zumindest teilweise mit einem monofunktionellen Alkohol abreagierten Polyisocyanats.

Die US-A-4 433 095 beschreibt eine Klebstoffzusammensetzung aus einer wäßrigen Polymerdispersion und einem wasserdispergierbaren aromatischen Polyisocyanat mit einer NCO-Funktionalität von größer als 2.2. Mischungen von Dispersionen werden nicht im einzelnen angegeben. Nach der US-A-3 931 088 werden Klebstoffzusammensetzungen hergestellt, die eine wäßrige Lösung eines Polyvinylalkohols, eine wäßrige Emulsion eines Vinylacetatpolymeren und/oder einen wäßrigen Latex eines Butadienpolymeren sowie eine Lösung einer Isocyanatverbindung oder eines Isocyanatpolymeren enthalten.

Die US-A-4 636 546 beschreibt einen Herstellprozeß für Überzüge und Klebstoffzusammensetzungen, bei dem wäßrige Dispersionen von Polymeren, welche NCO-reaktiven Wasserstoff besitzen, mit einem wasseremulgierbaren Polyisocyanat vorreagieren und dann mit einer wäßrigen Polyurethandispersion gemischt werden. Das Verfahren beinhaltet mit der notwendigen Vorreaktion einen zusätzlichen Verfahrensschritt.

US-A-4 762 880 beansprucht eine Klebstoffzusammensetzung für einen Thermokaschierprozeß bestehend aus einer Dispersion eines aromatisch substituierten Polyurethans und einem emulgierbaren Polyisocyanat. Der Kaschierprozeß erfolgt bei hohen Temperaturen von etwa 150°C, was zu einer Substrat- und Laminatschädigung führen kann.

Die EP-A-0 276 482 beschreibt Mischungen aus wäßrigen Polymerdispersionen und deren Verwendung als Beschichtungsmassen und Überzüge. Die hierbei beanspruchten Mischungen zeichnen sich auf Substraten wie Textil oder Leder durch verbesserte Naßreibechtheit, angenehmeren Griff und verbesserte Bügelbarkeit aus. Die entstehenden Filme sind jedoch nur bei hohen Temperaturen, die für Thermokaschierprozesse

2

mit thermoplastischen Kunststoffen wie ABS zu hoch sind, erweichbar.

Aufgabe der vorliegenden Erfindung ist es, Klebstoffe mit erniedrigter Aktivierungstemperatur und verbessertem Haftungsvermögen, insbesondere von ABS zur Verfügung zu stellen.

Gegenstand der vorliegenden Erfindung ist eine Mischung wäßriger Polymerdispersionen enthaltend

A) mindestens eine 5 bis 70 Gew.-% Feststoff enthaltende unterhalb 70°C vorzugsweise zwischen 20 und 50°C filmbildende Dispersion eines Polymeren A, das einen Erweichungspunkt unterhalb von 70°C, insbesondere unterhalb 66°C aufweist

B) mindestens eine 5 bis 70 Gew.-% Feststoff enthaltende Dispersion eines Polymeren B aus olefinisch ungesättigten Monomeren, dessen Erweichungspunkt oberhalb von 70°C liegt

wobei das Mengenverhältnis der Dispersionen A:B im Bereich 97:3 bis 60:40 bezogen auf Feststoffanteile der Dispersionen A + B liegt

C) gegebenenfalls mindestens eine Polyisocyanatverbindung mit wenigstens zwei Isocyanatgruppen, welche den Dispersionen vorzugsweise zu 0,1 bis 20 Gew.-Teilen bezogen auf 100 g Feststoff der Dispersionen A und B zugesetzt wird,

D) gegebenenfalls übliche Zusatzstoffe.

Zur Ermittlung der Erweichungstemperatur von Polymeren werden die auf einen Feststoffgehalt von 30 % eingestellten Dispersionen in Teflonschalen 3 Tage bei Raumtemperatur, 20 Stunden bei 65°C und 20 Minuten bei 130°C getrocknet. Die thermomechanische Analyse (TMA) wird mit dem TMA-7-Gerät (Perkin Elmer) unter Heliumatmosphäre durchgeführt. Geräteeinstellung:

- Durchmesser Penetrationssonde 0,89 mm
- Sondenlast 50 g
- Heizrate 5°/min
- Temperaturbereich -100 bis +120°C

Als Erweichungstemperatur gilt diejenige Temperatur, bei der die belastete Sonde deutlich in dem schmelzenden Polymerfilm eindringt. Dieser Vorgang äußert sich in einem deutlichen Knickpunkt in einer Abbildung, in der die prozentuale Eindringtiefe der Sonde gegen die Filmtemperatur aufgetragen wird.

In einer bevorzugten Ausführungsform handelt es sich bei der Dispersion B um eine unterhalb 70°C nicht filmbildende Dispersion.

Zur Bestimmung der Filmbildungstemperatur wird die wäßrige Dispersion auf eine Teflonschale gegossen und das Wasser verdampft. Die Mindestfilmbildungstemperatur ist die Temperatur, die nach dem Abdampfen mindestens vorliegen muß, um einen geschlossenen Polymerfilm zu erreichen.

In einer bevorzugten Ausführungsform liegen die Komponenten (in Feststoff) bezogen auf die gesamte wäßrige Mischung in folgenden Gewichtsprozenten vor

A) von 36 bis 22, insbesondere von 32 bis 22 Gew.-%

B) von 4 bis 16, insbesondere von 8 bis 16 Gew.-%

C) von 0 bis 10, insbesondere von 0 bis 3 Gew.-%

D) von 0 bis 10, insbesondere von 0 bis 25 Gew.-%.

Gegenüber den dem Stand der Technik entsprechenden Klebstoffzusammensetzungen zeichnen sich die erfindungsgemäßen Mischungen aus wäßrigen Polymerdispersionen durch eine Reihe von Vorteilen aus. Die Haftung an unvorbehandelten mit wäßrigen Klebstoffdispersionen äußerst schwierig zu verklebenden Substraten, wie z.B. ABS, wird deutlich verbessert. Die Wärmefestigkeiten der Verklebungen von PVC-kaschierten Substraten wird ebenfalls deutlich gesteigert.

Überraschenderweise wurde gefunden, daß die Aktivierbarkeit der Klebstoffilme, hergestellt aus den erfindungsgemäßen Klebstoffzusammensetzungen trotz hoher Anteile des Emulsionspolymerisates B, nahezu konstant niedrig blieb und in etwa derjenigen Aktivierbarkeit der reinen unterhalb 70°C filmbildenden Polymerdispersion, bevorzugt PU-Dispersion, entspricht.

Im Gegensatz zu dem in der US-A-4 636 546 beschriebenen Prozeß zeichnet sich die vorliegende Erfindung dadurch aus, daß die Herstellung der Klebstoffzusammensetzung nicht notwendigerweise an die Anwesenheit H-aktiver Gruppen im Emulsionspolymerisat gebunden ist und daher auch ein zusätzlicher Verfahrensschritt, d.h. die Reaktion eines emulgierbaren Polyisocyanates mit dem H-Gruppen enthaltenden Emulsionspolymeren, wegfällt.

Die Klebstoffzubereitung wird hierdurch wesentlich vereinfacht.

Als Polymer A können anionische, kationische oder nicht ionisch modifizierte Polymere eingesetzt werden. Bevorzugt werden als unter 70°C filmbildende Dispersionen Polyurethandispersionen eingesetzt. Die Herstellung solcher PU-Dispersionen erfolgt vorzugsweise gemäß GB-PS 1 076 668, DT-PS 1 184 946, DT-AS 1 495 745, DT-OS 1 495 847, DT-OS 2 035 732, DT-OS 2 344 135, DT-OS 2 446 440, US-PS 3 479 310, US-PS 3 756 992, US-PS 3 905 929, EP 0 304 718, "Die angewandte Makromolekulare Chemie" 26, 1972, Seiten 85 bis 106 oder "Angewandte Chemie", 82, 1970, Seiten 53 bis 63.

EP 0 444 259 B1

Als unter 70°C filmbildende wäßrige Dispersionen können ebenfalls Dispersionen auf der Basis von Natur- oder synthetischem Kautschuk, Polybutadien, Polychloropren, Polyethylen, chlorsulfoniertem Polyethylen, gegebenenfalls partiell verseiften EVA-Copolymerisaten und Polyacrylnitril eingesetzt werden.

Zur Herstellung der Polyurethane werden die an sich in der Polyurethanchemie bekannten Isocyanatkomponenten, höhermolekulare Polyhydroxyverbindungen (Polyhydroxypolyester, -ether und -cabonate) mit einem Molekulargewicht von 400 bis 10 000, sowie Kettenverlängerungsmittel mit mindestens zwei gegenüber Isocyanatgruppen reaktionsfähigen Wasserstoffatomen und vorzugsweise einem Molekulargewicht von 18 bis 399 eingesetzt. Weiterhin werden ionische Verbindungen eingesetzt, die neben mindestens einer gegenüber Isocyanatgruppen reaktiven Gruppe mindestens eine hydrophile Gruppe wie z.B. eine tertiäre oder quartäre Ammoniumgruppe, eine Carboxylat- oder Sulfonatgruppe oder eine in derartige Gruppen überführbare Gruppe aufweisen. Außerdem können nicht ionisch hydrophile Verbindungen eingebaut werden, die neben mindestens einer gegenüber Isocyanatgruppen reaktionsfähigen Gruppe innerhalb einer Polyetherkette endständig und/oder seitenständig angeordnete Ethylenoxideinheiten aufweisen. Der Gehalt an ionischen Gruppen beträgt vorzugsweise zwischen 2 bis 200 mäq/100 g Polyurethan, bevorzugt 2 bis 100 mäq/100 g Polyurethan, der Gehalt an Ethylenoxideinheiten bezogen auf das Polyurethan beträgt 0 bis 25 Gew.-%, bevorzugt 0 bis 15 Gew.-%.

Außerdem können zur Herstellung der oben beschriebenen Dispersionen Hilfs- und Zusatzstoffe (Lösungsmittel, Neutralisationsmittel, Emulgatoren, Katalysatoren) verwendet werden.

Die Herstellung der Polyurethandispersionen kann entsprechend der Lehre der DE-A-1 495 745 und USA-A-3 479 310 nach dem sog. "Acetonverfahren" gemäß der Lehre der DE-A-2 725 589, US-A-4 269 748, US-A-4 192 937 oder US-A-4 292 226 nach dem "Ketimin/Ketazin-Prozeß" und nach dem "Schmelzdispergierverfahren" gemäß der Lehre der DE-A-1 770 068, US-A-3 756 992, DE-A-2 637 690 oder auch entsprechend der Vorschrift der US-A-4 387 181 erfolgen.

Die erfindungsgemäß zu verwendenden Dispersionen A besitzen vorzugsweise einen Feststoffgehalt von 5 bis 70 Gew.-%, vorzugsweise von 35 bis 50 Gew.-%. Der mittlere Teilchendurchmesser liegt zwischen 20 und 800 nm.

Die erfindungsgemäß zu verwendenden Polyurethane A haben vorzugsweise NCO-reaktive Endgruppen, insbesondere Mercapto- und vor allem Hydroxyl- und Aminogruppen.

Die Dispersionen B werden entsprechend dem Stand der Technik nach den bekannten Methoden der Emulsionspolymerisation hergestellt. Vorzugsweise handelt es sich dabei um Polymere/Copolymere von α-ß-ungesättigten Monomeren und/oder Dienen gemäß US-A-3 939 013 und DE-A 2 014 385, DE-A-1 935 345, DE-A-1 935 348 und DE-A-1 935 349.

Grundsätzlich können als Dispersion B sämtliche, die genannten Eigenschaften aufweisende Polymerdispersionen eingesetzt werden, beispielsweise auf Basis von Styrol-Butadien-Copolymeren, Styrol-Acrylnitril-Copolymeren, Poly-α-methylstyrol, Polystyrol, Polybutadien-Acrylnitril-Copolymeren und Polyacrylestern. Bevorzugt werden Polymere auf Basis von wie Butadien und Vinylgruppen enthaltende Verbindungen, vorzugsweise aromatische eingesetzt. Besonders bevorzugt sind Polymere aus Acrylnitril und/oder α-Methylstyrol, wie sie beispielsweise in der US-A-4 009 226, DE-A-3 305 544 und DE-A-3 006 804 beschrieben sind. Dabei sollten bei Styrol- und/oder α-Methylstyrol-Copolymeren der Anteil an Styrol bzw. α-Methylstyrol mindestens 60 Gew.-%, vorzugsweise 60 bis 75 % betragen.

Der Feststoffgehalt der erfindungsgemäß zu verwendenden Dispersionen B liegt im Bereich zwischen 5 und 70 Gew.-%, vorzugsweise zwischen 10 und 60 Gew.-%.

Das Mischungsverhältnis Dispersion A/Dispersion B beträgt 97:3 bis 60:40, insbesondere 80:20 bis 60:40, bezogen auf Gewichtsteile Feststoff. Die Mischung der Dispersionen kann durch Zusammenmischen der fertiggestellten Dispersionen in den gewünschten Verhältnissen erfolgen. Dabei können Rührer und Mischaggregate einfacher Bauart und Ausführung verwendet werden.

Bevorzugte Polyisocyanatverbindungen C sind Polyisocyanatzubereitungen aus aliphatischen und/oder aromatischen Polyisocyanaten, die durch eingebaute ionische und/oder nicht ionische Gruppen in Wasser emulgierbar sind siehe z.B. DE-A-35 21 618 (= US-A-46 63 377).

Besonders bevorzugt sind die aus der DE-A-3 521 618 (= US-A-4 663 377) bekannten dispergierbaren Polyisocyanatzubereitungen aus einem aliphatischen Polyisocyanat und einer die Dispergierbarkeit des Polyisocyanat gewährleistenden Menge eines Emulgators, wobei der Emulgator insbesondere das Umsetzungsprodukt eines aliphatischen Polyisocyanates mit einem ein- oder mehrwertigen, nichtionischen Polyalkylenether-Alkohol mit mindestens einer, mindestens 10 Ethylenoxideinheiten aufweisenden Polyetherkette enthält.

Das Polyisocyanat C wird der Mischung vorzugsweise auf folgende Weise zugefügt:

Vor der Verarbeitung wird eine ausgewogene Menge Polyisocyanat C in die Mischung der Dispersion A und B gegeben und die Klebstoffzusammensetzung ca. 1 Minute innig vermischt.

4

Werden die erfindungsgemäßen Dispersionsmischungen als Klebstoffe verwendet, können in der Klebstofftechnik üblicherweise verwendeten Hilfs- und Zusatzstoffe D mitverwendet werden, wie Verdickungsmittel, Pigmente und Stabilisatoren.

Klebstoffzusammensetzungen auf Basis der erfindungsgemäßen Mischungen von A und B eignen sich besonders als Klebstoff für Thermokaschierprozesse, insbesondere als Klebstoff für die Kaschierung von ABS mit Folien aus weichgemachtem PVC oder PVC-Schaumstoff im Tiefziehverfahren. Die erfindungsgemäßen Klebstoffzusammensetzungen können nach sämtlichen, für wäßrige Dispersionen bekannten Auftragstechniken appliziert werden, wie z.B. Spritzen, Streichen, Rakeln oder Gießen. Die folgenden Beispiele sollen die Erfindung erläutern. Alle Angaben sind hierbei als Gewichtsanteile bzw- Gew.-% zu verstehen.

Herstellung der Klebstoffdispersionen

Bei zweikomponentiger Verarbeitung wird durch Einrühren von emulgierbarem Isocyanat C eine Klebstoffzusammensetzung hergestellt.

Ermittlung der Wärmefestigkeiten von PVC-PVC-Verklebungen (Softening Point; SP)

2,5 cm breite Streifen eines Weich-PVC-Materials werden mit der Klebstoffdispersion in einer Schichtdicke von 0,1 mm bestrichen.

Nach einer Ablüftzeit von 5 Stunden werden die Klebstoffoberflächen durch Strahlungswärme innerhalb von 4 Sekunden auf eine Temperatur von 50°C gebracht. Anschließend werden die Klebestreifen so zusammengelegt, daß eine überlappende Fläche von 2,5 x 2,5 cm vorliegt. Die Prüfkörper werden dann 10 Sekunden mit einem Druck von 0,4 MPa gepreßt und anschließend 3 Tage bei Raumtemperatur gelagert.

Die Wärmefestigkeit wird in einem Zugscherversuch bestimmt. Hierbei wird der Prüfkörper einseitig mit einer Masse von 11 kg belastet. Nach 20 minütigem Tempern bei 40°C wird durch Erhöhen der Temperatur des Klebverbundes um 0,25°C je Minute die Temperatur ermittelt, bei der die Klebung versagt.

Mit den vorstehend beschriebenen Dispersionen werden Verklebungen hergestellt, und zwar PVC-PVC sowie PVC-Folie-ABS-Verklebungen.

PVC-Material: transparent, 4 mm dick, 30 % Dioctylphthalat als Weichmacher. Vor dem Aufbringen der Dispersion wurden die zu verklebenden Flächen gründlich gerauht (Schleifpapier der Körnung 40) und vom Schleifstaub befreit. Es wurde eine Naßklebstoffschicht von 0,1 mm auf die Substrate aufgebracht und 30 Minuten bei Raumtemperatur abgelüftet.

ABS-Material: handelsübliches ABS-Material für Autoinnenteile glatt, Prüfkörper 150 x 25 mm. Zur Verklebung wurden die Prüfkörper ohne Vorbehandlung mit einer 0,1 m dicken Klebstoffschicht versehen und dann bei Raumtemperatur 30 Minuten abgelüftet.

PVC-Folie: Zum Einsatz kann eine handelsübliche PVC-Kaschierfolie von 1,6 mm Dicke

Ermittlung der Aktiviertemperatur der Klebstoffilme (MAT)

Auf zwei angerauhte PVC-Streifen (200 x 30 mm) werden einkomponentig 0,1 mm dicke Schichten der Klebstoffzusammensetzungen aufgetragen und 1 Stunde bei Raumtemperatur, dann 24 Stunden im Klimaraum abgelüftet. Die Verklebung erfolgt durch Thermoaktivierung in einem Funck-Aktiviergerät (Typ A 1000). Dabei wird ein 10 mm breiter Streifen schockaktiviert und sofort über Kreuz auf einen zweiten Streifen gelegt, der nicht aktiviert worden ist. Die entstehende Klebfläche von 1 cm² wird mit einer Kissenpresse 10 sec lang mit einem Druck von 0,5 bar verpreßt. Beim Lösen der Verklebung wird die Filmkoaleszenz beurteilt. Eine ausreichende Aktivierung des Klebfilms ist dann erreicht, wenn eine nahezu vollständige (100 %ige) Filmkoaleszenz bei der Verklebung eintritt. Die Aktivierzeit wird zwischen 1 und 10 Sekunden variiert, wobei mit zunehmender Aktivierzeit die Klebefilmtemperatur steigt.

Schälwiderstand PVC-PVC (sw)

Gerauhtes PVC-Material (70 x 30 mm) wird mit einer etwa 0,1 mm dicken Klebstoffschicht versehen, Danach lüftet der Film 1 Stunde bei Raumtemperatur ab. Anschließend wird mit dem Funck-Aktiviergerät 10 s schockaktiviert und die Klebstreifen mit 4 bar verpreßt. Die Widerstandsmessung erfolgt mittels einer handelsüblichen Zugprüfmaschine sofort bzw. 3 Tage nach der Verklebung.

Wärmestandversuch - ABS-PVC-Folie (WS-ABS)

ABS-Prüfkörper (70 x 20 mm) werden mit der zweikomponentigen Klebstoffmischung in 0,1 mm Schichtdicke eingestrichen. Die PVC-Folie wird mit Hilfe einer einseitig heizbaren Backenpresse, deren Oberflächentemperatur 100°C beträgt, mit dem ABS-Material verklebt. Dabei wird ein gleichgroßer Streifen einer PVC-Schaumfolie mit 4 bar Anpreßdruck 10 s lang gegen das ABSTeil gedrückt. Nach dem Fügevorgang lagert der Prüfkörper 3 Tage lang im Klimaraum. Der Schälversuch wird bei 60°C durchgeführt. Hierbei wird die Zeit gemessen, die benötigt wird, um im 180° Peel bei einer Belastung von 250 g eine Schälstrecke von 60 mm zurückzulegen.

Beispiele

1. Klebstoffzusammensetzung bestehend aus

(Dispersion A)
hergestellt nach der DE-AS 1 495 745 aus einem Adipinsäure-Butandiol-Polyester, einer Isocyanatmischung, einem Diamin, welches Sulfonatgruppen enthält sowie einem Aminoalkohol. Der Feststoffgehalt der Dispersion beträgt 40 Gew.-%, der pH-Wert 7,5, die Viskosität 150 mPa.s (Brookfield LVT Spdl. 2, 23°C) und die mittlere Teilchengröße 120 nm (Laserkorrelationsspektroskopie). Die Erweichungstemperatur nach der vorstehend beschriebenen TMA beträgt 45 bis 50°C.

Dispersion B (Styrol/$\alpha$-Methylstyrol-(co)polymer)

B1: Polymerisatdispersion auf Basis eines Copolymerisats aus Styrol (68 %) und Acrylnitril (32 Gew.-%) mit einem Feststoffgehalt von 39,7 %, einer Viskosität von 26 mPa.s (Brookfield LVT Spdl. 2, 23°C) und einer mittleren Teilchengröße von 115 nm (Laserkorrelationsspektroskopie).

B2: Polymerisatdispersion auf Basis eines Copolymerisats aus $\alpha$-Methylstyrol (72 %) und Acrylnitril (28 Gew.-%) mit einem Feststoffgehalt von 35,1 %, einer Viskosität von 31 mPa.s (Brookfield LVT Spdl. 2, 23°C) und einer mittleren Teilchengröße von 70 nm (Laserkorrelationsspektroskopie).

B3: Polymerisatdispersion auf Basis eines Copolymerisats aus $\alpha$-Methylstyrol (72 %) und Acrylnitril (28 Gew.-%) mit einem Feststoffgehalt von 34,4 %, einer Viskosität von 18 mPa.s (Brookfield LVT, Spdl. 2, 23°C und einer mittleren Teilchengröße von 58 nm (Laserkorrelationsspektroskopie).

Polyisocyanat c): emulgierbares Isocyanat gemäß DE-A-35 21 618 (= US-A-46 63 377), Bsp. 2; NCO-Gehalt 19 %, Viskosität 2.600 mPas. Die Einsatzmengen an Dispersionen verstehen sich in der folgenden Tabelle als Gewichtsteile.

Die Klebstoffzusammensetzungen wurden durch Zusammengeben und anschließendem Rühren hergestellt. Die Zugabe des emulgierbaren Polyisocyanats zur Mischung der Dispersion erfolgte kurz vor der Beschichtung der Prüfkörper.

|        | D i s p e r s i o n |         |         |         | Poly-Isocyanat |
|--------|---------|---------|---------|---------|----------------|
|        | A       | B1      | B2      | B3      | C              |
| 1*     | 100 Tle | -       | -       | -       | 3 Tle          |
| 2      | 30 Tle  | 10 Tle  | -       | -       | 3 Tle          |
| 3      | 80 Tle  | 20 Tle  | -       | -       | 3 Tle          |
| 4*     | 50 Tle  | 50 Tle  | -       | -       | 3 Tle          |
| 5      | 90 Tle  | -       | 10 Tle  | -       | 3 Tle          |
| 6      | 80 Tle  | -       | 20 Tle  | -       | 3 Tle          |
| 7*     | 50 Tle  | -       | 50 Tle  | -       | 3 Tle          |
| 8      | 90 Tle  | -       | -       | 10 Tle  | 3 Tle          |
| 9      | 80 Tle  | -       | -       | 20 Tle  | 3 Tle          |
| 10*    | 50 Tle  | -       | -       | 50 Tle  | 3 Tle          |

\* = Vergleichsversuche

**Ergebnisse**

| Beispiel | 1* | 2 | 3 | 4* | 5 | 6 | 7* | 8 | 9 | 10* |
|---|---|---|---|---|---|---|---|---|---|---|
| Aktiviertemperatur MAT/sec | 3 | 3 | 3 | 10 | 3 | 3 | 7 | 3 | 3 | 10 |
| Schälwiderstand SW (N mm$^{-1}$) | | | | | | | | | | |
| sofort | 5,5 | 5,7 | 6,5 | 3,7 | 6,6 | 3,2 | 1,5 | 3,4 | 2,0 | 2,0 |
| nach 3 Tagen | 9,4 | 8,4 | 8,7 | 8,1 | 9,3 | 7,2 | 6,7 | 7,7 | 7,5 | 4,4 |
| Wärmefestigkeit SP/°C | 100 | 96 | 78 | 66 | 107 | 107 | 107 | 109 | 111 | 95 |
| Wärmestand WS/Min | 10 | 22 | 103 | 225 | 35 | 130 | 225 | 28 | 63 | 105 |

\* = Vergleichsversuche

Aus der Tabelle folgt:

1. Die erfindungsgemäßen Zusammensetzungen zeichnen sich im Unterschied zu Beispielen 1, 4, 7 und 10 dadurch aus, daß schon geringe Anteile der Dispersion B die Wärmefestigkeit von PVC-ABS-Verklebungen signifikant verbessern.

Die Aktiviertemperatur der Filme ist bei einem Anteil von über 40 Gew.-% Dispersion B zu hoch.

2. Vergleichsversuch zu US-A-4 762 880 Es wurde eine der in Sp. 4 der US-A-4 762 880 angegebenen aromatischen Polyurethandispersionen (Desmocoll E-471) im Verhältnis 100:3 Gew.-Teile unmittelbar vor Gebrauch mit Vernetzer Isocyanat C umgesetzt. Die Polyurethandispersion hatte einen Erweichungspunkt von >70°C.

Mit der oben beschriebenen Klebstoffzusammensetzung konnten entsprechend den in Beispiel 1 beschriebenen Prüfverfahren keine PBC-ABS-Verklebungen hergestellt werden, da die angewendete Kaschiertemperatur von 100°C auf der Folienseiten (= ca. 60°C auf Klebstofffilm) nicht ausreichte, um den Klebstofffilm zu aktivieren. Höhere Kaschiertemperaturen führten zu einer irreversiblen Schädigung des Substrates und des Laminates.

## Patentansprüche

1. Verwendung einer Mischung wäßriger Polymerdispersionen, zur Herstellung thermoaktivierbarer Klebstofffilme, enthaltend

   A) eine 5 bis 70 Gew.-% Festsoff enthaltende, unterhalb 70 °C filmbildende Dispersion eines Polyurethans, eines Natur- oder synthetischen Kautschuks, Polybutadiens, Polychloroprens, Polyethylens, chlorsulfonierten Polyethylens, gegebenenfalls partiell verseiften EVA-Copolymerisaten und Polyacrylnitrils, die einen Erweichungspunkt unterhalb 70 °C aufweisen,

   B) eine 5 bis 70 Gew.-% Festsoff enthaltende Dispersion eines Styrol-Butadien-Copolymeren, Styrol-Acrylnitril-Copolymeren, Poly-$\alpha$-Methyl-styrols, Polystyrols, Polybutadien-Acrylnitril-Copolymeren und von Polyacrylestern, deren Erweichungspunkt oberhalb 70 °C liegt,

   wobei das Mengenverhältnis der Dispersionen A):B) im Bereich 97:3 bis 60:40, bezogen auf Festsoffanteile, liegt,

   C) gegebenenfalls eine Polyisocyanatverbindung mit wenigstens zwei Isocyanatgruppen, welche den Dispersionen zu 0,1 bis 20 Gew.-Teilen bezogen auf 100 g Festsoff der Dispersionen A) und B) zugesetzt wird,

   D) gegebenenfalls übliche Zusatzstoffe.

2. Verwendung nach Anspruch 1, dadurch gekennzeichnet, daß Polymer A) ein Polyurethan ist.

3. Verwendung nach Anspruch 1, dadurch gekennzeichnet, daß Polymer A) ein Polyurethan mit eingebauten hydrophilen Gruppen ist.

4. Verwendung nach Anspruch 1, dadurch gekennzeichnet, daß Polymer A) ein Polyurethan mit eingebauten hydrophilen Gruppen und einer Erweichungstemperatur unter 50°C ist.

5. Verwendung nach Anspruch 1, dadurch gekennzeichnet, daß Polymer B) ein Styrol- oder $\alpha$-Methylstyrol(co)polymer ist.

6. Verfahren zur Kaschierung von Thermoplast-Formteilen mit durch Wärmeeinwirkung weichgemachten Thermoplastfolien, dadurch gekennzeichnet, daß als thermoaktivierbare Klebstofffolien solche nach Anspruch 1 verwendet werden.

## Claims

1. The use of a mixture of aqueous polymer dispersions for the production of heat-activatable adhesive films, containing

   A) a dispersion - containing 5 to 70% by weight solids and having a film-forming temperature below 70°C - of a polyurethane, a natural or synthetic rubber, polybutadiene, polychloroprene, polyethylene, chlorosulfonated polyethylene, optionally partially saponified EVA copolymers and polyacrylonitrile which have a softening point below 70°C,

   B) a dispersion - containing 5 to 70% by weight solids - of a styrene/butadiene copolymer, styrene/acrylonitrile copolymer, poly-a-methyl styrene, polystyrene, polybutadiene/acrylonitrile copolymer and polyacrylates which have a softening point above 70°C,

   the quantitative ratio of dispersion A) to dispersion B) being from 97:3 to 60:40, based on their solids content,

   C) optionally a polyisocyanate compound containing at least two isocyanate groups which is preferably added to the dispersions in a quantity of 0.1 to 20 parts by weight, based on 100 g solids of dispersions A) and B),

D) optionally standard additives.

2. The use claimed in claim 1, characterized in that polymer A) is a polyurethane.

3. The use claimed in claim 1, characterized in that polymer A) is a polyurethane containing incorporated hydrophilic groups.

4. The use claimed in claim 1, characterized in that polymer A) is a polyurethane containing incorporated hydrophilic groups and having a softening temperature below 50°C.

5. The use claimed in claim 1, characterized in that polymer B) is a styrene or α-methyl styrene (co)polymer.

6. A process for laminating thermoplastic mouldings with thermoplastic films softened by heat, characterized in that the heat-activable adhesive films according to claim 1 are used as the heat-activable adhesive films.


**Revendications**

1. Utilisation d'un mélange de dispersions aqueuses de polymères pour l'application de pellicules de colles thermo-activables, ledit mélange contenant :

A) une dispersion, contenant 5 à 70 % en poids de matières solides, filmogène au-dessous de 70°C, d'un polyuréthanne, d'un caoutchouc naturel ou synthétique, d'un polybutadiène, d'un polychloroprène, d'un polyéthylène, d'un polyéthylène chlorosulfoné, de copolymères éthylène-acétate de vinyle le cas échéant partiellement saponifiés et de polyacrylonitrile, ayant un point de ramollissement inférieur à 70°C,

B) une dispersion, contenant 5 à 70 % en poids de matières solides, d'un copolymère styrène-butadiène, d'un copolymère styrène-acrylonitrile, d'un poly-α-méthylstyrène, d'un polystyrène, d'un copolymère polybutadièneacrylonitrile et d'esters polyacryliques, dont le point de ramollissement est supérieur à 70°C,

les proportions relatives entres les dispersions A et B, sur les matières solides, allant de 97:3 à 60:40,

C) le cas échéant, un polyisocyanate à au moins deux groupes isocyanate ajouté aux dispersions en proportions de 0,1 à 20 parties en poids pour 100 g des matières solides des dispersions A et B,

D) le cas échéant des additifs usuels.

2. Utilisation selon la revendication 1, caractérisée en ce que le polymère A est un polyuréthanne.

3. Utilisation selon la revendication 1, caractérisée en ce que le polymère A est un polyuréthanne contenant des groupes hydrophiles combinés chimiquement.

4. Utilisation selon la revendication 1, caractérisée en ce que le polymère A est un polyuréthanne à groupes hydrophiles, présentant une température de ramollissement inférieure à 50°C.

5. Utilisation selon la revendication 1, caractérisée en ce que le polymère B est un (co)polymère du styrène ou de l'α-méthylstyrène.

6. Procédé pour doubler des pièces moulées en matières thermoplastiques par des feuilles de matières thermoplastiques se ramollissant sous l'action de la chaleur, caractérisé en ce que l'on utilise en tant que feuilles de colles thermo-activables des feuilles de colles selon la revendication 1.